Europäisches Patentamt

European Patent Office

Office européen des brevets

(19)

(11) Publication number: **0 125 535**
**A2**

(12) **EUROPEAN PATENT APPLICATION**

(21) Application number: **84104592.5**

(22) Date of filing: **24.04.84**

(51) Int. Cl.³: **G 11 B 5/86**
**G 11 B 13/04**

(30) Priority: **12.05.83 US 493861**

(43) Date of publication of application:
**21.11.84 Bulletin 84/47**

(84) Designated Contracting States:
**AT BE CH DE FR GB IT LI NL SE**

(71) Applicant: **GENERAL ELECTRIC COMPANY**
**1 River Road**
**Schenectady New York 12305(US)**

(72) Inventor: **Kryder, Mark Howard**
**Wexford Run Road**
**Bradford Woods Pennsylvania 15015(US)**

(74) Representative: **Catherine, Alain**
**GETSCO 42, avenue Montaigne**
**F-75008 Paris(FR)**

(54) Rapid thermo-magnetic recording disk printer and master disk for same.

(57) A master disk for simultaneous recording of all information upon a thermo-magnetic recording disk, has a layer of a heating-energy-reflecting material supported by a substrate of a material substantially transparent to the form of heating energy used. The reflecting material layer is apertured at locations at which the disk-to-be-recorded is to have a bit of digital information of opposite binary value from the binary value of locations at which the reflecting layer remains intact. The master disk is placed adjacent to a recording disk previously having all domains therein magnetized in a first direction, and a beam of heating energy, such as light and the like, is directed through the master disk, in the presence of a magnetic field of direction opposite to the direction of the previous magnetization of the domains. The magnetization of domains situated under apertures in the reflecting layer is reversed, responsive to the heating energy beam and the opposite-direction external field, to rapidly write the binary information from the master disk onto the recording disk.

./...

RAPID THERMO-MAGNETIC RECORDING DISK PRINTER AND
MASTER DISK FOR SAME

Background of the Invention

The present application relates to thermo-
magnetic recording and, more particularly, to
a novel method for rapidly recording all information
onto a thermo-magnetic recording disk, and to
a master disk for facilitating that process.

The use of magnetic disks for storage of
recorded information for computer systems is well
known.  It has recently been proposed that magnetic
disks may also be used for very high-density storage
of video information, as for display in television
systems and the like.  Video disk technology currently
in use is of an archival optical nature and does
not allow erasure and/or rewriting of information
stored on the optical disk; a magnetic video disk
would allow erasure and rewriting, just as a magnetic
tape utilized in audio recording allows erasure
and rewriting of the sound patterns to be reproduced.
One significant problem with the widespread use
of magnetic video disks is that there has hitherto
been no technique for the rapid, practical and
inexpensive printing of the recorded information
upon the recording disk.  The only proven technique
for creating the information on a magnetic disk,
has been to serially write each bit of the desired
information onto the magnetic recording disk with
an inductive or thermo-magnetic recording head.
While it has been proposed that magnetic disks
could be thermo-magnetically printed from a master
magnetic disk by bringing a "blank" magnetic disk

-1-

into intimate contact with the master magnetic disk and heating the magnetic disk to above its Curie, or compensation, temperature, it will be difficult, if not impossible, to obtain sufficiently large magnetic fields in sufficiently small areas to thermo-magnetically copy information from a video disk which is written at very high data bit densities. Furthermore, the cycle time for heating and cooling a disk would be undesirably extensive.

It is therefore highly desirable to provide a method for transferring essentially all of the information for a thermo-magnetic recording disk thereto in a relatively rapid manner, and for providing a master disk facilitating this rapid "one-exposure" printing of a disk to be recorded.

Brief Summary of the Invention

In accordance with the invention, a master disk, for use in thermo-magnetically recording essentially all binary digital information on a recording disk in a single process step, has a layer of heating-energy blocking material deposited upon a surface of a substrate of a material substantially transparent to the form of heating energy to be used. The blocking layer has apertures therethrough at locations at which a domain of an underlying recording disk is to be recorded with one binary state, and remains intact at locations at which a domain is to be recorded with the remaining binary state.

A recording disk, having substantially all domains thereof previously recorded with a magnetic field in a first direction, is placed adjacent

-2-

to the master disk and subjected to an external magnetic field in a direction opposite to the first direction. Heating energy quanta, such as light photons, illuminate all of the master disk; the quanta are transmitted to the recording disk only through the apertures of the master disk, whereby the temperature of only the domains of the recording disk associated with each aperture is raised. Responsive to the presence of the external field during cooling of the heated domain, a magnetic field is formed in that domain in a direction substantially opposite to the first direction. The oppositely-directed magnetic moments record binary information on the recording disk, with all disk information being substantially simultaneously imprinted responsive to a single exposure of the master disk/recording disk combination to the heat energy.

Accordingly, it is an object of the present invention to provide a novel method and apparatus for substantially simultaneously transferring essentially all of the desired information to a thermo-magnetic recording disk in a rapid manner.

It is another object of the present invention to provide a novel master disk for facilitating the substantially simultaneous transfer of essentially all information to a thermo-magnetic disk to be recorded.

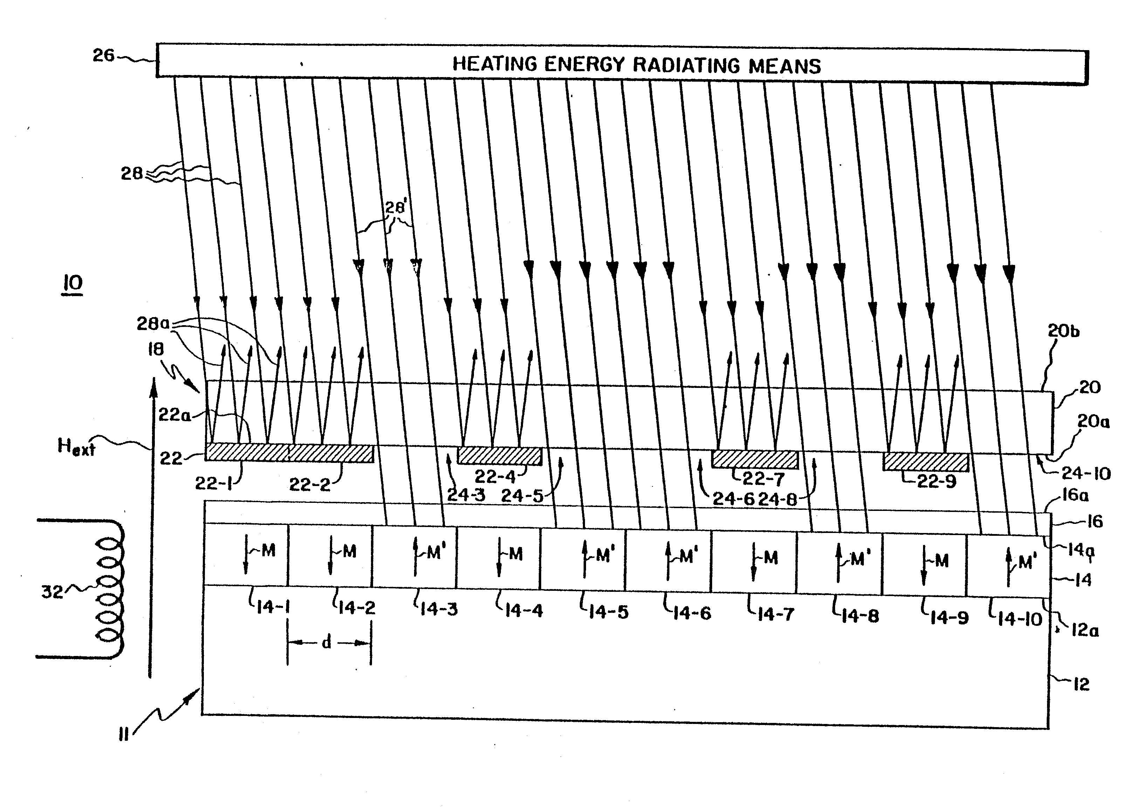

These and other objects of the present invention will become apparent upon consideration of the following detailed description, when read in conjunction with the drawing.

-3-

Brief Description of the Drawing

The sole Figure is a somewhat schematic side view of a thermo-magnetic disk recording system, illustrating the principles of the present invention.

Detailed Description of the Invention

Referring to the sole Figure, a system 10 for substantially simultaneously recording essentially all of the digital information upon a thermo-magnetic recording disk 11, is illustrated. Recording disk 11, as more fully described and claimed in co-pending application Serial No. (RD-14,746), filed                , 1983, assigned to the assignee of the present invention and incorporated herein by reference in its entirety, includes a non-magnetic substrate 12, preferably formed in the shape of a disk, for rotation about a central axis (not shown) thereof. Upon one surface 12a of the disk substrate, a thin-film layer 14 of a thermo-magnetic recording material (such as an amorphous alloy of at least one rare-earth element and at least one transition-metal element, and the like) is deposited. A thin layer 16 of an optically-transparent protective material, such as silicon dioxide and the like, is deposited upon the free surface 14a of the recording layer.

As described and claimed in co-pending application Serial No. (RD-14,804), filed                , 1983, assigned to the assignee of the present invention and incorporated herein by reference in its entirety, as well as the aforementioned application Serial No. (RD-14,746), the recording layer 14 supports a multiplicity of magnetic domains 14-N (e.g. domains 14-1 through 14-10 in the illustration)

-4-

each of which has a magnetic moment M or M' disposed substantially perpendicular to the recording disk surfaces 12a and 14a. Each of the domains 14-N is initially provided with a magnetic moment M, illustratively in the downward direction toward surface 12a, by subjecting the entire disk to a saturation field $H_{sat}$ (not shown) in the same direction. The preconditioned disk 11, having all moments M in the same, saturation-field direction, may be stored until data is to be recorded upon the preconditioned disk.

In accordance with one aspect of the present invention, a master recording disk 18 includes a substrate 20 of a size sufficient to completely cover recording disk 11, when the substrate 20 is placed such that a blocking layer 22, on a first surface 20a thereof, is adjacent to, but not necessarily in abutment with, the upper surface 16a of recording disk 11. Advantageously, member 20 is of a substantially uniform thickness, such that a remaining surface 20b is substantially parallel to surface 20a. Substrate 20 is fabricated of a material selected to pass that form of energy (as described hereinbelow) utilized to raise the temperature of those domains 14-N of disk 11 to be recorded with a bit of binary digital information, where the recorded bit will have a state opposite to that state represented by the domains having the saturation-field-directed magnetic moment M. An energy-blocking layer 22 is provided upon master substrate surface 20a; layer 22 is fabricated of a material selected to block transmission of the form of heating energy to be utilized. Advantageously, the blocking layer 22 material will have

-5-

properties causing the reflection of the heating energy from the blocking layer surface 22a closest to the master disk substrate 20, in preference to a material which absorbs the heating energy and thus raising the temperature of layer 22. Layer 22 includes a multiplicity of regions 22-N, each associated with one of the multiplicity of magnetic recording member domains 14-N. One of a lesser multiplicity of apertures 24 is formed through layer 22 at the location of a domain, in an underlying disk 11 to be recorded, of opposite binary state. Thus, if the binary information sequence 1101001010 is to be recorded upon a disk 11 by recording a binary 1 state as a magnetic moment M in the downward-directed sense in a domain, e.g. domain 14-1, and a binary 0 state is recorded as an upward-directed magnetic moment M', the saturation-field moments M already define the binary 1-encoded domains and require no further processing. Accordingly, blocking layer 22 exists in segments 22-1, 22-2, 22-4, 22-7 and 22-9, corresponding to the binary 1-encoded domains 14-1, 14-2, 14-4, 14-7 and 14-9, respectively, when master disk 18 is placed adjacent to the surface 16a of disk 11. The binary 0-encoded domains 14-3, 14-5, 14-6, 14-8 and 14-10, to be recorded responsive to receipt of heating energy, correspond to apertures 24-3, 24-5, 24-6, 24-8 and 24-10 in the blocking layer 22 of master disk 18.

The saturation-sensitized disk 11, having all domain moments in the first, e.g. downward direction, is therefore placed adjacent to master recording disk 18. A heating energy radiating

-6-

means 26 is energized to provide a broad beam of heating energy quanta 28 directed through the substrate 20 of master disk 18 toward disk 11. As previously mentioned hereinabove, substrate 20 is fabricated of a material substantially transparent to the heating energy quanta. Illustratively, if heating energy quanta 28 are photons of light energy, from a high-intensity xenon flash lamp radiating means 26 and the like, then substrate 20 is fabricated of glass and the like light-transparent material. In the illustrated, light energy example, blocking layer 22 is fabricated of a film of chromium and the like material. Thus, those photons 28 transmitted through layer 20 and encountering blocking layer portions 22-1, 22-2, etc., are reflected back from the chromium layer portion surface, as reflected photons 28a. Therefore, the reflected photons 28a never reach the recording disk 11 surface and do not heat the recording disk domains, e.g. domains 14-1, 14-2, etc. therebelow. Other quanta 28' are transmitted through the substantially transparent substrate 20 and (being in the area of an aperture, e.g. aperture 24-3, etc.) do not encounter the blocking layer 22. These photons are transmitted through the master disk 18 to recording disk 11. These quanta 28' are then transmitted through the substantially-transparent protective layer 16 of disk 11 and impinge upon the underlying magnetic recording layer 14 domain, e.g. domain 14-3 and the like, and impart their energy thereto, raising the temperature in the recipient domain. Thus, it will be seen that the temperature in domains 14-3, 14-5, 14-6, 14-8 and 14-10, in the illustrative example, is simultaneously substantially increased when heating energy radiating means 26 is activated. As described in the aforementioned applications, a magnetic moment M', of direction opposite to the saturation-field-induced magnetic moment M, is imparted to a domain responsive to the heating, and subsequent cooling, of that domain in the presence of an external field $H_{ext}$ (as provided by an external-field-providing means 32) having a magnitude greater than some minimum magnitude but less than the saturation field $H_{sat}$ magnitude. Therefore, if external field $H_{ext}$ exists in each of the domains while radiating means 26 is operated to heat the domains-to-be-recorded and for a sufficiently long interval thereafter to allow the heated domains to cool, the oppositely-directed magnetic moment M' is induced in each such heated domain. As also described in the aforementioned applications, the second binary state magnetic moment M' is recorded with either temporary (and therefore erasable and re-recordable) nature or with permanent nature, dependent upon the temperature to which the recorded domain is raised and, therefore, upon the energy output of radiating means 26.

It should be understood that, while simple binary encoding of information has been illustrated, with a blocking layer 22 having blocking portions 22-N and apertures 24-N of substantially the same dimensions, established by the domain diameter d (typically on the order of 0.5-3 micrometers), the use of variable length blocking portions 22-N and apertures 24-N could equally as well be utilized, in a pulse-width-modulated data storage scheme, if the magnetic recording layer 14 will support different size domains over the full required range of domain sizes. It should also be understood that recording of disks 11 can be of a semi-continuous nature, utilizing mechanical means (not shown) for stepping a sequence of unidirectionally-magnetized disks 11 under master disk 18 and flash-exposing that one of disks 11 positioned under the master disk. In this manner, essentially all information for an entire video disk can be printed with a single exposure, in a relatively short time.

While one presently preferred embodiment of my method for rapid recording of essentially all information upon a thermo-magnetic recording disk, and of a novel master disk for use therein, has been described in some detail herein, many variations and modifications will now become apparent to those skilled in the art. In particular, masking of radiation printing a thermo-magnetic recording disk allows definition of relatively small features in the printed pattern, as a separate magnetic field is not required in each small domain area. It should be understood that other types of heating energy radiation, such as x-rays and electron beams, as well as other forms of a masking layer(s) and techniques can be utilized and that sub-micron resolution can be attained therewith. Therefore, many variations and modifications will now become apparent to those skilled in the art. It is my intent, therefore, to be limited only by the scope of the appending claims and not by the specific details and instrumentalities presented by way of explanation of a presently preferred embodiment herein.

What I Claim is:

1. . A method for thermo-magnetically recording binary digital information upon a recording disk, comprising the steps of:

providing a recording disk to be recorded and having a layer of magnetic recording material supporting a multiplicity of domains, each magnetized substantially in a first direction;

providing a master disk having a layer of a blocking material present at locations defining a first binary state and having apertures therethrough at other locations defining a remaining binary state;

positioning the master disk in registration with the disk to be recorded;

providing a magnetic bias field, in a direction substantially opposite to the first direction, at at least those of the multiplicity of recording layer domains of the disk to be recorded with said remaining binary state;

directing a beam of heating energy quanta through the apertures in the master disk and toward the disk to be recorded;

maintaining the beam for a time interval selected to simultaneously heat to a preselected temperature at least one recording layer domain associated with each master disk aperture; and

cooling the recording layer in the presence of the bias magnetic field, to provide a magnetic moment of direction opposite to the first direction in each cooling domain, to essentially simultaneously record all binary digital information on the recording disk in a single exposure of the heating energy beam.

2.  The method of Claim 1, further comprising the steps of:  providing a substrate to support the master disk apertured blocking layer; and fabricating the master disk substrate of a material substantially transparent to the form of heating energy utilized.

3.  The method of Claim 2, wherein the heating energy quanta are light photons and the master disk substrate is fabricated of a substantially light-transparent material.

4.  The method of Claim 3, wherein the master disk substrate is fabricated of glass.

5.  The method of Claim 4, wherein the material of the blocking layer is selected to substantially reflect the heating energy quanta.

6.  The method of Claim 3, wherein the blocking layer is fabricated of chromium.

7.  The method of Claim 1, wherein each blocking layer aperture is of a size predeterminately selected to expose a single domain in the recording disk recording layer to heating energy quanta.

8.  The method of Claim 1, further comprising the steps:  of providing a plurality of recording disks; moving each disk, in succession, into registration with the master disk; exposing the recording disk then in registration with the master disk to the bias magnetic field and to the heating energy quanta; and then removing the recorded disk, after cooling, from registration with the master disk, preparatory to recording of the next subsequent one of the plurality of recording disks.

9.  Apparatus for thermo-magnetically recording essentially all binary digital information in

-11-

a single exposure on a recording disk having a layer of recording material supporting a multiplicity of domains each premagnetized substantially in a first direction, comprising:

means for directing a beam of heating energy quanta for a predetermined time interval toward a recording disk to be thermo-magnetically recorded;

a master disk interposed between the beam directing means and the disk to be recorded; said master disk having a layer of a material selected to block said heating energy quanta at each of at least one location defining a first binary state to be recorded at an associated location upon said recording disk; said master disk having an aperture at each of at least one different location for defining a remaining binary state in an associated location of the disk to be recorded; and

means for forming a bias magnetic field in a direction opposite to said first direction and of a predetermined magnitude at at least those of said multiplicity of the recording layer domains to be recorded with said remaining binary state, at least during said predetermined time interval.

10. The apparatus of claim 9, wherein said bias field forming means is also operative for a selected time interval, while heated domains are cooling, immediately after said predetermined time interval.

11. The apparatus of claim 9, wherein said master disk further includes a substrate, formed of a material substantially transparent to said heating energy quanta, supporting said blocking layer.

-12-

12. The apparatus of Claim 11, wherein said heating energy quanta are light photons and said substrate is formed of a substantially optically transparent material.

13. The apparatus of claim 12, wherein said substrate is formed of glass.

14. The apparatus of claim 12, wherein said blocking layer is formed of chromium.

15. A master disk for thermo-magnetic recording of binary information, comprising:

a substrate of a material substantially transparent to a selected form of heating energy, said substrate having a surface; and

a layer, fabricated upon said substrate surface, of a material selected to block transmission of the selected form of heating energy therethrough; the blocking layer having a array of locations assigned thereto, with the presence of blocking material of the layer at at least one of the locations defining a first binary state; and said blocking layer having at least one aperture formed therethrough at at least one other location for defining a remaining binary state.

16. The master recording disk of Claim 15, wherein the heating energy quanta are light photons; said substrate being fabricated of a substantially light-transparent material.

17. The master recording disk of Claim 16, wherein said substrate is fabricated of glass.

18. The master recording disk of Claim 10, wherein said blocking layer is fabricated of chromium.

19. The master recording disk of Claim 9, wherein each aperture has a diameter from about 0.5 micrometers to about 3 micrometers.

GHK:nbK

0125535